# EUROPÄISCHE PATENTSCHRIFT

(11) **EP 2 841 323 B1**
(45) Veröffentlichungstag und Bekanntmachung des Hinweises auf die Patenterteilung: **27.04.2016**
(21) Anmeldenummer: 13702925.2
(22) Anmeldetag: 05.02.2013
(51) Int. Cl.: B62D 1/184

(54) **LENKSÄULE FÜR EINEN KRAFTWAGEN**
STEERING COLUMN FOR A MOTOR VEHICLE
COLONNE DE DIRECTION POUR UNE AUTOMOBILE

(30) Priorität: 28.04.2012 DE 102012008836
(43) Veröffentlichungstag der Anmeldung: 04.03.2015
(73) Patentinhaber: Daimler AG, 70327 Stuttgart (DE)
(72) Erfinder: HANSEN, Detlef, 22869 Schenefeld (DE); HARMS, Torsten, 21129 Hamburg (DE); HEBENSTREIT, Axel, 70569 Stuttgart (DE); KITTLER, Holger, 22761 Hamburg (DE); MAAK, Jan, 21217 Seevetal (DE); NIEMÖLLER, Jürgen, 71069 Sindelfingen (DE); SCHULZE, Steffen, 70597 Stuttgart (DE); SCHWIEGER, Marco, 21147 Hamburg (DE)
(74) Vertreter: JENSEN & SON
(86) Internationale Anmeldenummer: PCT/EP2013/000343
(87) Internationale Veröffentlichungsnummer: WO 2013/159846

(56) Entgegenhaltungen:
- DE-A1-102010 051 880
- US-A1- 2006 028 010

## Beschreibung

Die Erfindung betrifft eine längsverstellbare Lenksäule für einen Kraftwagen, insbesondere einen Personenkraftwagen, gemäß dem Oberbegriff von Patentanspruch 1.

Eine solche längsverstellbare Lenksäule ist beispielsweise bereits aus der DE 10 2010 051 880 A1 als bekannt zu entnehmen. Ein inneres Mantelrohr der Lenksäule, welches eine Lenkspindel aufnimmt, ist dabei längsverstellbar in einem äußeren Mantelrohr aufgenommen, welches seinerseits höhenverstellbar an einer rohbauseitig des Kraftwagens befestigbaren Lenkkonsole gehalten ist. Weiterhin umfasst die Lenksäule eine Klemmeinrichtung, mittels welcher das innere Mantelrohr in seiner eingestellten Längsposition relativ zum äußeren Mantelrohr lösbar festlegbar ist.

Bei derartigen, mechanisch verstellbaren Lenksäulen muss die manuell aufzubringende Verstellkraft im gelösten Zustand der Klemmeinrichtung, also wenn das innere Mantelrohr relativ zum äußeren Mantelrohr in seiner Bewegung freigegeben ist, möglichst gering sein, um eine komfortable Verstellung zu gewährleisten. Auf der anderen Seite ist es für eine hohe Steifigkeit bzw. Eigenfrequenz der Lenksäule notwendig, dass der erforderliche Schiebesitz zwischen dem inneren und dem äußeren Mantelrohr mittels der Klemmvorrichtung im verriegelten Zustand möglichst starr ist. Somit ergibt sich ein technischer Konflikt zwischen einer möglichst leichtgängigen Verstellung des inneren zum äußeren Mantelrohr bei gelöster Klemmeinrichtung einerseits und einer möglichst starren Festlegung des inneren Mantelrohrs relativ zum äußeren Mantelrohr bei verriegelter Klemmeinrichtung.

Dieses Problem verschärft sich außerdem unter der Vorgabe, dass die Lenksäule mit den beiden Mantelrohren zur Aufnahme von unfallbedingter Aufprallenergie ausgebildet sein soll, und außerdem nur ein begrenzter Bauraum zur Verfügung steht. Gerade in diesem Fall sind bisherige Lösungen, bei welchen beispielsweise zwischen den beiden Mantelrohren zum Toleranzausgleich eine Kunststoffeinspritzung vorgesehen ist, welche beispielsweise in der DE 103 43 685 A1 offenbart ist, nicht geeignet.

Aus der DE 197 07 067 C1 ist schließlich eine Lenksäuleneinheit für einen Kraftwagen als bekannt zu entnehmen, bei welcher ein Mantelrohr eingesetzt wird, welches einen Nutschlitz aufweist. Dieser Nutschlitz dient zur Verdrehsicherung, sodass das Mantelrohr positionsgenau an einer Befestigungsstelle auf Seiten einer Lenkkonsole fixiert werden kann.

Weiterhin bezieht sich die US 2006/ 002 80 10 A1 auf eine auf eine Lenksäulenanordnung mit einem äußeren und einem inneren Mantelrohr und einer Klemmvorrichtung. Das äußere Mantelrohr weist einen Längsschlitz auf, über den die Klemmung des inneren Mantelrohrs bewerkstelligt wird.

Aufgabe der vorliegenden Erfindung ist es, eine Lenksäule der eingangs genannten Art zu schaffen, bei welcher das innere Mantelrohr einerseits leichtgängig relativ zum äußeren Mantelrohr längsverstellbar und andererseits starr festlegbar ist.

Diese Aufgabe wird erfindungsgemäß durch eine Lenksäule mit den Merkmalen des Patentanspruchs 1 gelöst. Vorteilhafte Ausgestaltungen mit zweckmäßigen und nichttrivialen Weiterbildungen der Erfindung sind in den übrigen Patentansprüchen angegeben.

Um eine Lenksäule der eingangs genannten Art mit einem inneren Mantelrohr zu schaffen, welches einerseits zur Längsverstellung leichtgängig relativ zum äußeren Mantelrohr verstellbar ist, und welches andererseits zur Gewährleistung einer hohen Steifigkeit bzw. Eigenfrequenz der Lenksäule besonders starr am äußeren Mantelteil festlegbar ist, ist es erfindungsgemäß vorgesehen, dass das äußere Mantelrohr zumindest über einen Längenbereich eine Aussparung aufweist, wodurch dessen Hohlquerschnitt mittels der Klemmeinrichtung veränderbar ist. Mit anderen Worten ist es erfindungsgemäß vorgesehen, den Hohlquerschnitt des äußeren Mantelrohrs zumindest über eine Teillänge mit einer Aussparung, beispielsweise in Form eines Längsschlitzes, zu versehen, sodass mittels der Klemmeinrichtung auf einfache Weise dessen Hohlquerschnitt vergrößert bzw. verkleinert werden kann, je nachdem, ob das innere Mantelrohr längsverstellt oder fixiert werden soll.

Durch das Vorsehen einer derartigen Aussparung kann somit einerseits - bei gelöster Klemmeinrichtung - ein entsprechend aufgeweiteter Hohlquerschnitt des äußeren Mantelrohrs erreicht werden, sodass das innere Mantelrohr leichtgängig relativ zum äußeren Mantelrohr axial verschoben werden kann. Andererseits kann der Hohlquerschnitt mittels der Klemmeinrichtung auf einfache Weise so verkleinert werden, dass sich eine äußerst zuverlässige und starre Festlegung des inneren Mantelrohrs in seiner eingestellten Längsposition relativ zum äußeren Mantelrohr ergibt. Somit kann insgesamt eine Lenksäule hoher Steifigkeit und Eigenfrequenz erzielt werden.

Weiterhin sieht die Erfindung vor, dass zwischen einem Klemmelement der Klemmeinrichtung und dem äußeren Mantelrohr ein Kraftübertragungselement, insbesondere eine Klemmplatte, vorgesehen ist. Der Vorteil einer derartigen Klemmplatte oder dergleichen Kraftübertragungselement besteht darin, dass dieses auf einfache Weise eine vergrößerte Klemmfläche aufweisen kann, sodass bei einer Klemmung entsprechende Klemmkräfte bis auf das äußere Mantelrohr übertragen werden können. Das Kraftübertragungselement ist dabei über eine das äußere Mantelrohr durchsetzende Mitnahmeverbindung mit dem inneren Mantelrohr bewegungsgekoppelt. Durch diese Mitnahmeverbindung wird das Kraftübertragungselement, insbesondere die Klemmplatte, auf einfache Weise vom inneren Mantelrohr mitgenommen, falls das innere Mantelrohr relativ zum äußeren Mantelrohr verstellt oder aber im Falle einer unfallbedingten Kraftbeaufschlagung das innere teleskopartig in das äußere Mantelrohr geschoben wird.

Eine weitere vorteilhafte Ausführungsform sieht vor, dass die Aussparung zu einer Lenkradseite des äußeren Mantelrohrs hin offen ausgebildet ist. Durch eine derartige Aussparung des äußeren Mantelrohrs lässt sich dessen Hohlquerschnitt mittels der Klemmeinrichtung auf besonders einfache Weise in dessen Durchmesser variieren, sodass einerseits eine besonders günstige Längsverstellung und andererseits eine äußerst starre Festlegung des inneren Mantelrohrs relativ zum äußeren Mantelrohr erreicht werden kann.

Dabei hat es sich in weiterer Ausgestaltung der Erfindung als vorteilhaft gezeigt, wenn die Aussparung zumindest im Wesentlichen als in axialer Richtung des äußeren Mantelrohrs verlaufender Schlitz ausgebildet ist. Ein derartiger Schlitz ist fertigungstechnisch besonders einfach herstellbar.

Weiterhin vorteilhaft ist es, wenn die Klemmeinrichtung eine Klemmkeilvorrichtung umfasst. Eine solche Klemmkeilvorrichtung ermöglicht eine besonders zuverlässige Festlegung des inneren Mantelrohrs relativ zum äußeren Mantelrohr, insbesondere dann, wenn die Lenksäule zur Absorption von Aufprallenergie heranziehbar sein soll.

Die Mitnahmeverbindung ist dabei vorzugsweise form- und/oder stoffschlüssig ausgeführt, da hierdurch eine besonders zuverlässige Verbindung zwischen dem Kraftübertragungselement und dem inneren Mantelrohr zu erreichen ist.

Eine weitere vorteilhafte Ausführungsform sieht vor, dass aus dem äußeren Mantelrohr ein Langloch für die Mitnahmeverbindung ausgespart ist. Dieses Langloch kann dabei beispielsweise so gestaltet sein, dass es als Führung für die Mitnahmeverbindung dient.

In einer weiteren vorteilhaften Ausführungsform ist der Klemmeinrichtung wenigstens ein Reibung erhöhendes Element zugeordnet. Dies kann insbesondere eine entsprechende Reibfolie sein, welche beispielsweise zwischen einem Klemmelement der Klemmeinrichtung und dem äußeren Mantelrohr bzw. dem Kraftübertragungselement angeordnet ist. Alternativ wäre auch eine Beschichtung oder dergleichen denkbar. Hierdurch kann einerseits eine besonders sichere Fixierung des inneren Mantelrohrs relativ zum äußeren Mantelrohr erreicht werden und andererseits die Unfallkraft, welche gegebenenfalls durch die Lenksäule absorbiert werden kann, erhöht werden.

Schließlich hat es sich als vorteilhaft gezeigt, wenn das äußere Mantelrohr höhenverstellbar an der Lenkkonsole gehalten ist. Hierdurch ergibt sich eine in alle wesentlichen Richtungen verstellbare Lenksäule mit den oben beschriebenen Vorteilen.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

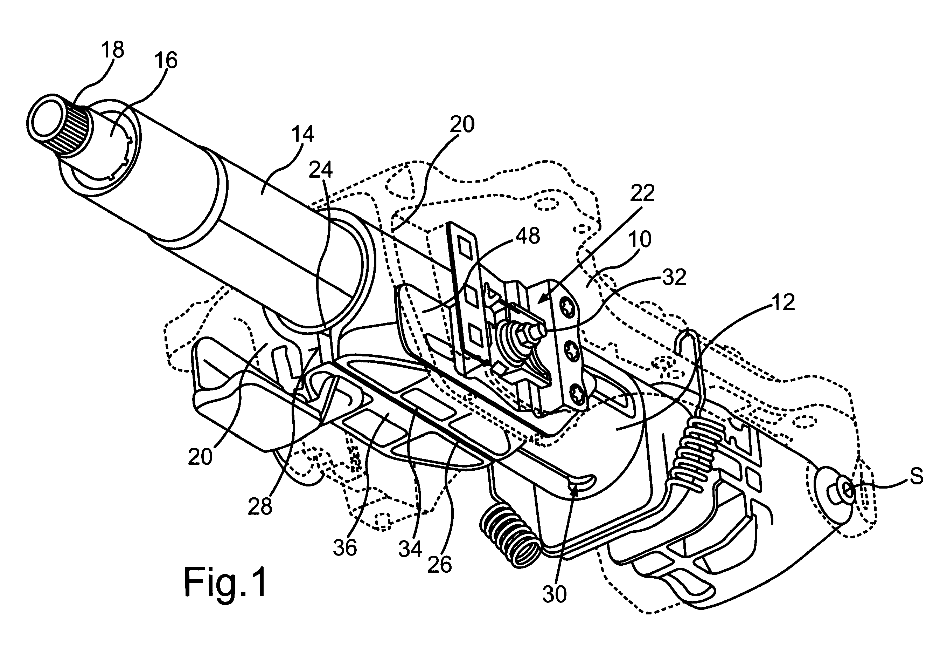

- Fig. 1: eine Perspektivansicht von schräg unten auf eine Lenksäule für einen Kraftwagen mit einem eine Lenkspindel aufnehmenden inneren Mantelrohr, welches längsverstellbar in einem an einer rohbauseitig fixierbaren Lenkkonsole gehaltenen, einen Hohlquerschnitt aufweisenden äußeren Mantelrohr aufgenommen ist, und mit einer Klemmeinrichtung, mittels welcher das innere Mantelrohr in seiner eingestellten Längsposition relativ zum äußeren Mantelrohr lösbar festlegbar ist, wobei das äußere Mantelrohr unterseitig über einen erheblichen Längenbereich eine Aussparung in Form eines in Axialrichtung verlaufenden Schlitzes aufweist, welcher zur Lenkradseite des äußeren Mantelrohrs hin offen ausgebildet ist, wodurch der Hohlquerschnitt des äußeren Mantelrohrs mittels der Klemmeinrichtung veränderbar ist;
- Fig. 2: eine perspektivische Unteransicht auf die Lenksäule gemäß Fig. 1 bei weggelassener Lenkkonsole und Klemmeinrichtung, sowie bei in Axialrichtung geschnitten dargestelltem äußeren Mantelrohr;
- Fig. 3: eine perspektivische Unteransicht auf die Lenksäule analog zu Fig. 2 bei weggelassener Lenkkonsole und weggelassener Klemmeinrichtung; und in
- Fig. 4: eine ausschnittsweise und leicht perspektivische Unteransicht auf die Lenkkonsole gemäß den Fig. 1 bis 3.

In Fig. 1 ist in einer Perspektivansicht von schräg vorne unten eine Lenksäule für einen Kraftwagen, der vorliegend als Personenkraftwagen ausgestaltet ist, dargestellt. Die Lenksäule umfasst eine Lenkkonsole 10, welche karosserieseitig beispielsweise im Bereich eines entsprechenden Querträgers festgelegt werden kann. An der Lenkkonsole 10 ist ein äußeres Mantelrohr 12 zur Höhenverstellung bzw. Neigungsverstellung schwenkbar um eine Schwenkachse S gehalten, welches vorliegend im Wesentlichen einen rohrförmigen Hohlquerschnitt aufweist und ein inneres Mantelrohr 14 auf im Weiteren noch näher beschriebene Weise längsverstellbar aufnimmt. Innerhalb des inneren Mantelrohrs 14 ist wiederum eine Lenkspindel 16 drehbar aufgenommen, welche an ihrem dem Fahrzeugführer zugewandten Ende eine entsprechende Verzahnung 18 aufweist, an welcher das Lenkrad der Lenksäule fixierbar ist.

Zur Halterung der Lenksäule weist die Lenkkonsole 10 an ihrer der Schwenkachse S abgewandten bzw. dem Lenkrad zugewandten Seite jeweilige, nach unten abstehende Lagerschenkel 20 auf, zwischen welchen die beiden Mantelrohre 12, 14 bzw. die Lenkspindel 16 hindurchgeführt sind. Im Bereich dieser Lagerschenkel 20 sind die beiden Mantelrohre 12, 14 bzw. die Lenkspindel 16 mittels einer Klemmeinrichtung 22 in Bezug auf die Lenkkonsole 10 bzw. relativ zueinander entsprechend festlegbar, deren prinzipieller Aufbau und deren Funktionsweise insbesondere der DE 10 2010 051 880 A1, deren Offenbarungsgehalt diesbezüglich als explizit mit umfasst gelten soll, zu entnehmen ist.

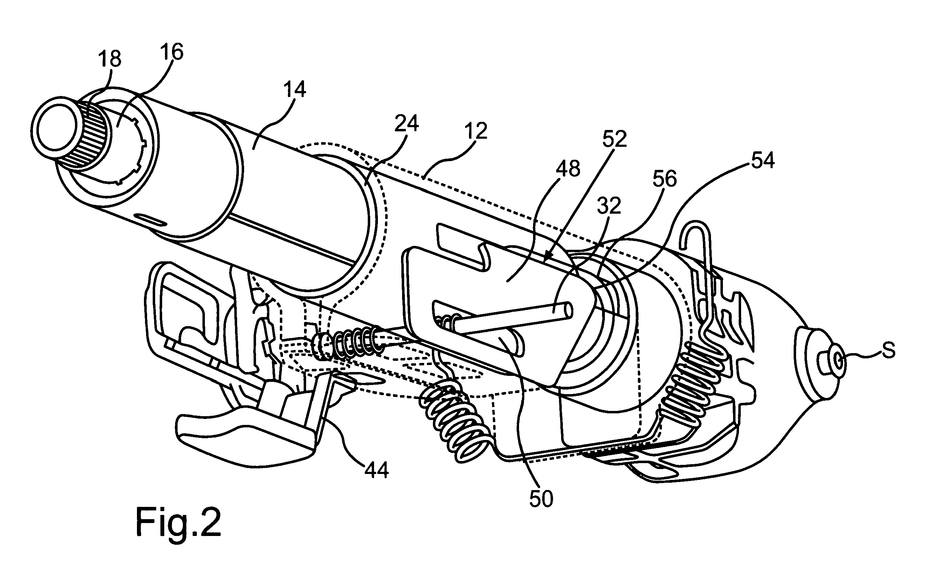

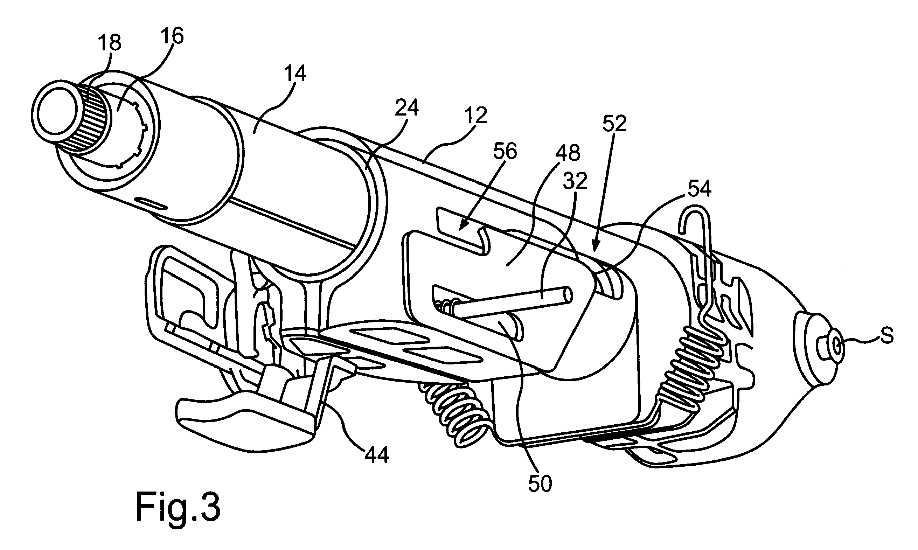

Wie aus den Fig. 2 und 3 zu erkennen ist, weist der Hohlquerschnitt des äußeren Mantelrohrs 12 einen Innendurchmesser auf, welcher zumindest im Wesentlichen auf einen Außendurchmesser des inneren Mantelrohrs 14 abgestimmt ist. Gegebenenfalls kann dabei - wie dies im vorliegenden Fall gegeben ist - zwischen dem inneren Mantelrohr 14 und dem äußeren Mantelrohr 12 noch ein Distanz-Rohrelement 24 oder dergleichen vorgesehen sein.

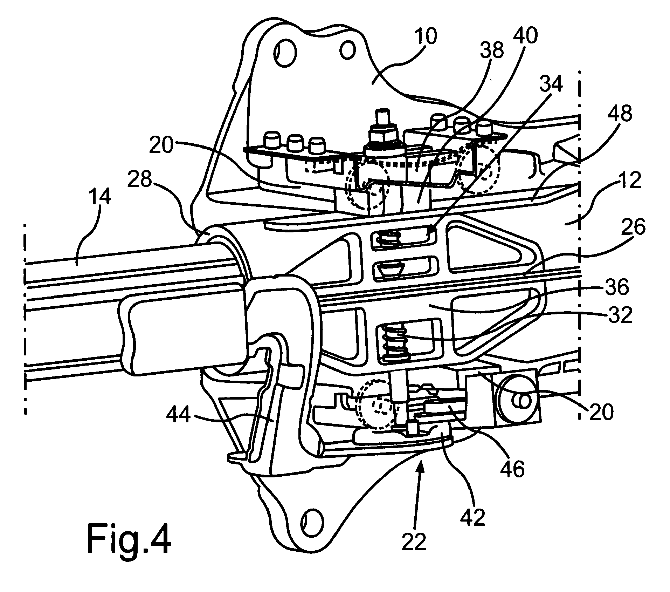

Des Weiteren ist insbesondere aus Fig. 4, welche eine ausschnittsweise Unteransicht auf die Lenksäule gemäß den vorherigen Figuren zeigt, sowie anhand von Fig. 1 erkennbar, dass das äußere Mantelrohr 14 über einen erheblichen Längenbereich eine Aussparung 26 in Form eines Schlitzes aufweist, welcher sich in Axialrichtung der Mantelrohre 12, 14 bzw. der Lenksäule 10 erstreckt. Diese Aussparung 26 ist dabei zu einer Lenkradseite 28 des äußeren Mantelrohrs 12 hin offen ausgebildet. Am gegenüberliegenden Ende weist die Aussparung 26 eine im Querschnitt etwa kreisförmige Vergrößerung 30 auf.

Durch die Aussparung 26 kann erreicht werden, dass der Hohlquerschnitt des äußeren Mantelrohrs 12 mittels der Klemmeinrichtung 22 veränderbar ist. Wird demzufolge die Klemmeinrichtung 22 auf im Weiteren noch näher beschriebene Weise gelöst, so ist das innere Mantelrohr 14 mit der Lenkspindel 16 relativ zum äußeren Mantelrohr 12 bzw. zur Lenkkonsole 10 axial beweglich längsverstellbar. Befindet sich die Klemmeinrichtung 22 auf im Weiteren noch näher beschriebene Weise hingegen in ihrer Klemmstellung, so wird der Hohlquerschnitt des äußeren Mantelrohrs 12 bzw. die Aussparung 26 so verkleinert, dass hierdurch das innere Mantelrohr 14 mit dem dieses umgebenden Distanz-Rohrelement 24 entsprechend relativ zum äußeren Mantelrohr 12 fixiert ist.

Durch die Aussparung 26 in Form des Spalts wird somit erreicht, dass die Längsverstellung des inneren Mantelrohrs 14 relativ zum äußeren Mantelrohr 12 nach dem Lösen der Klemmeinrichtung 22 besonders leichtgängig durchgeführt werden kann, ohne dass die Klemmwirkung in der Klemmstellung entsprechend negativ beeinflusst wird. Vielmehr wird erreicht, dass beim Entriegeln der Klemmeinrichtung 22 durch Auffederung des äußeren Mantelrohrs 12, wodurch sich die Aussparung 26 entsprechend in ihrer Breite vergrößert, ein vergrößertes Spiel zum inneren Mantelrohr 14 erzeugt wird, sodass diese im äußeren Mantelrohr 12 sehr leicht verschiebbar ist.

Im verriegelten Zustand der Klemmeinrichtung 22 wird die Breite der Aussparung 26 infolge der ausgeübten Klemmkraft hingegen so verkleinert, sodass das Spiel aufgehoben wird und die arretierende Verspannung zwischen den beiden Mantelrohren 12, 14 bzw. Mantelrohrteilen erfolgt.

Die Klemmeinrichtung 22 umfasst einen Klemmbolzen 32, welcher jeweilige, an die Aussparung 26 angrenzende äußere Mantelrohrbereiche 34, 36 durchsetzt. Am einen Ende des Klemmbolzens 32 ist dabei ein Paar von Klemmkeilen 38, 40 einer Klemmkeilvorrichtung vorgesehen, welche am jeweils korrespondierenden Lagerschenkel 20 der Lenkkonsole 10 gehalten sind. Auf der den Klemmkeilen 38, 40 gegenüberliegenden Seite weist die Klemmeinrichtung 26 eine Nockenscheibe 42 auf, welche mit einem Betätigungshebel 44 verbunden ist. Die Nockenscheibe 42 wirkt dabei mit einer feststehenden Nockenscheibe 46 zusammen, welche sich am korrespondierenden Lagerschenkel 20 der Lenkkonsole 10 abstützt. Durch entsprechendes Verschwenken des Betätigungshebels 44 nach unten bzw. nach oben wird somit die Nockenscheibe 42 relativ zur Nockenscheibe 46 verdreht, wodurch sich eine axiale Distanz zwischen der Nockenscheibe 46 und den Klemmkeilen 38, 40 entsprechend vergrößert oder verkleinert. Mit anderen Worten sind die Klemmkeile 38, 40 quer zur Längserstreckung der Mantelrohre 12, 14 verstellbar.

Da der Klemmkeil 40 unter Vermittlung eines im Weiteren noch näher erläuterten Kraftübertragungselements 48 im mittelbaren Kontakt mit dem korrespondierenden äußeren Mantelrohrbereich 34 des äußeren Mantelrohrs 12 steht, bewirkt eine Betätigung des Betätigungshebels 44 entsprechend eine Veränderung der Breite der Aussparung 26 bzw. des Abstands der beiden äußeren Mantelrohrbereiche 34, 36, und somit ein Klemmen oder Lösen des inneren Mantelrohrs 14 in Bezug auf das äußere Mantelrohr 12.

Das Kraftübertragungselement 48, das zwischen dem entsprechenden Klemmelement in Form des Klemmkeils 40 und dem äußeren Mantelrohr 12 bzw. dessen Mantelrohrbereich 34 vorgesehen ist, ist vorliegend als Klemmplatte ausgebildet. Im Gegensatz zu einer unmittelbaren Anlage des Klemmkeils 40 an dem äußeren Mantelrohrbereich 34, welches ebenso denkbar wäre, hat der Einsatz eines derartigen Kraftübertragungselements 48 den Vorteil, dass gegebenenfalls eine erhöhte Reibkraft zwischen der Klemmeinrichtung 22 und dem äußeren Mantelrohr 12 bereitgestellt werden kann.

Wird eine Ausgestaltung ohne Kraftübertragungselement 48 gewählt, so liegt der Klemmkeil 40 - ohne Kraftübertragungselement 48 - unmittelbar mit einer flachen Seite am äußeren Mantelrohr 12 und mit der gegenüberliegenden keilförmigen Seite an einem mittels eines Betätigungshebels 44 quer zur Längserstreckung der Mantelrohre 38,40 verstellbaren Gegenkeilkörper bzw. Klemmkeil 38 an, und steht in einer Mitnahmeverbindung mit dem inneren Mantelrohr 14 steht.

Der Einsatz des Kraftübertragungselements 48 hat insbesondere Vorteile, wenn die Lenksäule zur Absorption von Aufprallenergie herangezogen werden soll. Bei einer unfallbedingten Krafteinleitung und Relativbewegung der Mantelrohre 12, 14 schleift der Klemmkeil 40 dann nicht entlang des äußeren Mantelrohrs 12, sondern vielmehr entlang des Kraftübertragungselements 48, wodurch über dieses die eingeleitete Unfallenergie in die Klemmeinrichtung 22 eingeleitet und mittels der Klemmkeilwirkung abgebaut wird. Die eingeleitete Unfallenergie geht dabei weiter in die Lenkkonsole 10 und von dort in den Querträger bzw. die Kraftwagenkarosserie. Das Kraftübertragungselement 48 hat sich dabei insbesondere als vorteilhaft gezeigt, wenn als Werkstoffe für das äußere Mantelrohr 12 eine Magnesium-Druckgusslegierung vorgesehen wird. Hierdurch kann eine erhöhte Reibung bereitgestellt werden.

Das Kraftübertragungselement 48 selbst ist im vorliegenden Fall aus einer Stahllegierung gebildet und umfasst ein axiales Langloch 50, welches vom Klemmbolzen 32 der Klemmeinrichtung durchsetzt wird. Dabei ist erkennbar, dass das Kraftübertragungselement 48 gegenüber der korrespondierenden Anlagefläche des entsprechenden äußeren Mantelrohrbereichs 34 eine vergrößerte Fläche aufweist, sodass sich bei einer Klemmung der Klemmeinrichtung 22 höhere Klemmkräfte, die über den jeweiligen Klemmkeil 34, 36 wirken, auf das äußere Mantelrohr 12 übertragen und verteilen lassen.

Insbesondere aus den Fig. 2 und 3 ist des Weiteren erkennbar, dass das Kraftübertragungselement 48 über eine das äußere Mantelrohr 12 durchsetzende Mitnahmeverbindung 52 mit dem inneren Mantelrohr 14 bewegungsgekoppelt ist. Zur Herstellung dieser Mitnahmeverbindung 52 weist das Kraftübertragungselement 48 in Form der Klemmplatte unterseitig eine Greifleiste 54 auf, die nach innen abkragt und durch ein axiales Langloch 56 innerhalb des äußeren Mantelrohrs 12 hindurch mit dem inneren Mantelrohr 12 in Kontakt steht. Die Mitnahmeverbindung 52 zwischen dem inneren Mantelrohr 14 und dem Kraftübertragungselement 48 ist dabei vorzugsweise form- und/oder stoffschlüssig ausgeführt. Bei der Abkopplung des entsprechenden Klemmkeils 40 vom äußeren Mantel 12, um hierdurch eine unmittelbare Anlage an diesem zu vermeiden, kann der Klemmkeil 40 zum einen sehr einfach ausgebildet sein und zum anderen aufgrund der Umleitung über das Kraftübertragungselement 48 sowohl seine Funktion zum Abbau von Unfallenergie als auch zur Arretierung der Längsverstellung des inneren Mantelrohrs 14 bzw. der Lenksäule insgesamt wahrnehmen.

Bei einer derartigen unfallbedingten Kraftbeaufschlagung wird das innere Mantelrohr 14 unter Mitnahme des Kraftübertragungselements 48 entsprechend verschoben, wodurch sich eine entsprechende Reibung zwischen dem zugehörigen Klemmkeil 40, der axial fest am äußeren Mantelrohr 12 positioniert ist, und dem Kraftübertragungselement 48 ergibt. Dabei wird bevorzugter Weise zwischen dem Klemmkeil 40 und dem Kraftübertragungselement 48 ein Reibung erhöhendes Element, beispielsweise eine Reibfolie oder eine entsprechende Beschichtung, die die gewünschte Reibung zur Geltung bringt, vorgesehen. Dieses Reibung erhöhende Element kann dabei sowohl am Klemmkeil 40 als auch am Kraftübertragungselement 48, also auch an anderen Stellen der Klemmeinrichtung 22 vorgesehen sein.

Insgesamt ist somit erkennbar, dass durch die Aussparung 26 vorliegend das äußere Mantelrohr 12 in seinem Hohlquerschnitt beim Lösen der Klemmeinrichtung 22 so vergrößert werden kann, so dass sich geringe Längsverstellkräfte im entriegelten Zustand ergeben. Gleichzeitig kann durch die Klemmeinrichtung 22 der Hohlquerschnitt des äußeren Mantelrohrs 12 infolge des Vorsehens der Aussparung 26 so verringert werden, so dass sich eine optimale Festlegung des inneren Mantelrohrs 14 relativ zum äußeren Mantelrohr realisieren lässt. Hierdurch kann eine hohe Steifigkeit und Eigenfrequenz der Lenksäule erreicht werden. Ein weiterer Vorteil besteht darin, dass kein zusätzlicher Toleranzausgleich zwischen den beiden Mantelrohren 12, 14 zwingender Maßen erforderlich ist. Dies bewirkt zudem geringe Prozessschwankungen in der Montage.

## Patentansprüche

1. Lenksäule für einen Kraftwagen, mit einem eine Lenkspindel (16) aufnehmenden inneren Mantelrohr (14), welches längsverstellbar in einem an einer Lenkkonsole (10) gehaltenen, einen Hohlquerschnitt aufweisenden äußeren Mantelrohr (12) aufgenommen ist, und mit einer Klemmeinrichtung (22), mittels welcher das innere Mantelrohr (14) in seiner eingestellten Längsposition relativ zum äußeren Mantelrohr (12) lösbar festlegbar ist, wobei
**das äußere Mantelrohr (12) zumindest über einen Längenbereich eine Aussparung (26) aufweist, wodurch dessen Hohlquerschnitt mittels der Klemmeinrichtung (22) veränderbar ist, dadurch gekennzeichnet, dass zwischen einem Klemmelement (40) der Klemmeinrichtung (22) und dem äußeren Mantelrohr (12) ein Kraftübertragungselement (48) vorgesehen ist, welches über eine das äußere Mantelrohr (12) durchsetzende Mitnahmeverbindung (52) mit dem inneren Mantelrohr (14) bewegungsgekoppelt ist.**

2. Lenksäule nach Anspruch 1,
**dadurch gekennzeichnet, dass**
**das Kraftübertragungselement (48) eine Klemmplatte ist.**

3. Lenksäule nach einem der Ansprüche 1 oder 2,
**dadurch gekennzeichnet, dass**
die Aussparung (26) zu einer Lenkradseite (28) des äußeren Mantelrohrs (12) hin offen ausgebildet ist.

4. Lenksäule nach einem der vorhergehenden Ansprüche,
**dadurch gekennzeichnet, dass**
die Aussparung (26) zumindest im Wesentlichen als in Axialrichtung des äußeren Mantelrohres (12) verlaufender Schlitz ausgebildet ist.

5. Lenksäule nach einem der vorhergehenden Ansprüche,
**dadurch gekennzeichnet, dass**
die Klemmeinrichtung (22) eine Keilklemmvorrichtung umfasst.

6. Lenksäule nach einem der vorhergehenden Ansprüche,
**dadurch gekennzeichnet, dass**
das Kraftübertragungselement (48) über die Mitnahmeverbindung (52) form-und/oder stoffschlüssig mit dem inneren Mantelrohr (14) verbunden ist.

7. Lenksäule nach einem der vorhergehenden Ansprüche,
**dadurch gekennzeichnet, dass**
aus dem äußeren Mantelrohr (12) ein Langloch (56) für die Mitnahmeverbindung (52) ausgespart ist.

8. Lenksäule nach einem der vorhergehenden Ansprüche,
**dadurch gekennzeichnet, dass**
der Klemmeinrichtung (22) wenigstens ein Reibung erhöhendes Element zugeordnet ist.

9. Lenksäule nach einem der vorhergehenden Ansprüche,
**dadurch gekennzeichnet, dass**
das äußere Mantelrohr (12) höhenverstellbar an der Lenkkonsole gehalten ist.

## Claims

1. Steering column for a motor vehicle, having an inner jacket tube (14) receiving a steering spindle (16), which inner jacket tube (14) is received to be longitudinally adjustable in an outer jacket tube (12) which has a hollow cross-section and is held on a steering bracket (10), and having a clamping means (22), by means of which the inner jacket tube (14) can be releasably secured in its adjusted longitudinal position relative to the outer jacket tube (12), wherein the outer jacket tube (12) has a recess (26) over at least a portion of its length, wherein the hollow cross-section of the recess (26) can be changed by means of the clamping means (22), **characterised in that** a force transmission element (48) is provided between a clamping element (40) of the clamping means (22) and the outer jacket tube (12), which force transmission element (48) is movement-coupled via an entrainment connection (52) going through the outer jacket tube (12) with the inner jacket tube (14).

2. Steering column according to claim 1,
**characterised in that**
the force transmission element (48) is a clamping plate.

3. Steering column according to one of claims 1 or 2,
**characterised in that**
the recess (26) is designed to be open towards a steering wheel side (28) of the outer jacket tube (12).

4. Steering column according to one of the preceding claims,
**characterised in that**
the recess (26) is designed at least substantially as a slot extending in the axial direction of the outer jacket tube (12).

5. Steering column according to one of the preceding claims,
**characterised in that**
the clamping means (22) is a wedge clamping device.

6. Steering column according to one of the preceding claims,
**characterised in that**
the force transmission element (48) is connected via the entrainment connection (52) in a positive-locking and / or material-locking manner to the inner jacket tube (14).

7. Steering column according to one of the preceding claims,
**characterised in that**
an elongated hole (56) is recessed out of the outer jacket tube (12) for the entrainment connection (52).

8. Steering column according to one of the preceding claims,
**characterised in that**
at least one friction-increasing element is assigned to the clamping means (22).

9. Steering column according to one of the preceding claims,
**characterised in that**
the outer jacket tube (12) is held so as to be adjustable in height on the steering bracket.

## Revendications

1. Colonne de direction pour un véhicule automobile, comprenant un tube intérieur (14) de protection logeant un arbre (16) de direction, lequel est logé de manière à pouvoir se déplacer longitudinalement, dans un tube extérieur (12) de protection présentant une section transversale creuse, retenu sur une console (10) de direction et comprenant un dispositif (22) de serrage, qui permet de fixer amovible le tube intérieur (14) de protection dans sa position longitudinale réglée par rapport au tube extérieur (12) de protection, le tube extérieur (12) de protection présente au moins un évidemment (26) sur une zone longitudinale, dont la section transversale creuse peut être modifiée au moyen du dispositif (22) de serrage, **caractérisée en ce qu'**entre un élément (40) de serrage du dispositif (22) de serrage et le tube extérieur (12) de protection est disposé un élément (48) de transmission de force, qui est couplé en mouvement au tube intérieur (14) de protection par l'intermédiaire d'une liaison (52) d'entraînement entremêlant le tube extérieur (12) de protection.

2. Colonne de direction selon la revendication 1, **caractérisé en ce que** l'élément (48) de transmission de force est une plaque de serrage.

3. Colonne de direction selon l'une quelconque des revendications 1 ou 2, **caractérisée en ce que** l'évidemment (26) est ouvert vers un côté (28) de roue directrice du tube intérieur (12) de protection.

4. Colonne de direction selon l'une quelconque des revendications précédentes, **caractérisé en ce que** l'évidemment (26) est conçu au moins essentiellement en tant que fente s'étendant dans la direction axiale du tube extérieur (12) de protection.

5. Colonne de direction selon l'une quelconque des revendications précédentes, **caractérisée en ce que** le dispositif (22) de serrage comprend un dispositif d'ancrage.

6. Colonne de direction selon l'une quelconque des revendications précédentes, **caractérisée en ce que** l'élément (48) de transmission de force est relié par l'intermédiaire de la liaison (52) d'entraînement par complémentarité de forme et/ou par liaison de matière.

7. Colonne de direction selon l'une quelconque des revendications précédentes, **caractérisée en ce qu'**un trou allongé (56) est pratiqué dans le tube extérieur (12) de protection pour la liaison (52) d'entraînement.

8. Colonne de direction selon l'une quelconque des revendications précédentes, **caractérisée en ce que** le dispositif (22) de serrage est associé au moins à un élément augmentant le frottement.

9. Colonne de direction selon l'une quelconque des revendications précédentes, **caractérisée en ce que** le tube extérieur (12) de protection est retenu sur la console de direction de manière à pouvoir être réglé en hauteur.
